# EUROPEAN PATENT APPLICATION

(11) **EP 4 838 411 A1**
(43) Date of publication of application: **11.11.2026**
(21) Application number: 25305670.9
(22) Date of filing: 09.05.2025
(51) Int. Cl.: G06N 3/045, G06N 3/047, G06N 3/08, H04N 19/70

(54) **PARAMETER SHARING FOR MULTI-LEVEL PROBABILITY PREDICTION NETWORK USING HYBRID IMPLICIT NEURAL REPRESENTATION**

(71) Applicant: InterDigital CE Patent Holdings, SAS, 75017 Paris (FR)
(72) Inventor: SCHNITZLER, Francois, 56890 SAINT AVE (FR); DAMODARAN, Bharath Bhushan, 56000 VANNES (FR); LE MEUR, Olivier, 35160 TALENSAC (FR)
(74) Representative: Interdigital

(57) **Abstract**

A method and device for encoding and decoding video data is based on hybrid INR models using hierarchical grid levels of latent variables where some parameters of probability prediction networks of the grid levels are shared. The sharing may be based on clustering levels or on sharing common parameters for the probability prediction network or both.

## Description

### TECHNICAL FIELD

At least one of the present embodiments generally relates to a method and a device for encoding and decoding data and particularly to parameter sharing for multi-level probability prediction network using hybrid implicit neural representation.

### BACKGROUND ART

An implicit neural representation (INR) network is a neural network that is trained to represent a specific signal; the INR network is trained to predict a sample value of the signal when presented with the sample's spatial coordinates. A hybrid INR model improves the INR network's capability to learn local patterns of the signal. To that end, sample coordinates of the signal are first mapped into latent variables and the INR network is trained to represent the signal based on these latent variables. When the hybrid INR model is applied to signal compression, the latent variables represent the signal in the bitstream. To efficiently entropy code the latent variables, their respective distributions should be used. Current approaches estimate the latent variables' respective distributions based on context. The manner in which such context is constructed is instrumental in exploiting spatial and temporal redundancies across the latent variables.

### SUMMARY

According to an aspect of at least one embodiment, a decoding method comprises obtaining neural networks comprising at least a plurality of probability prediction (PP) networks and a synthesis network and parameters related to the neural networks, the parameters related to the PP networks comprising at least one shared parameter that is common to at least two PP networks and at least one specific parameter that is not shared between two or more PP networks, obtaining clusters of latent variable levels and associations between clusters and PP networks, obtaining, for each cluster, values of latent variables based on determined distribution given by the associated PP network, upsampling the obtained values, and producing an output data by feeding the upsampled values to the synthesis network, wherein the latent variables are arranged in hierarchical levels and wherein a PP network is associated with a cluster of levels of latent variables or with a single level of latent variables.

According to an aspect of at least one embodiment, an encoding method comprises performing a clustering of levels of latent variables arranged in a hierarchy, determining, for each cluster, a PP network and parameters of the PP network associated with the cluster, training a hybrid implicit neural representation model to produce a synthesis network, encoding the PP Networks, the PP network parameters and the synthesis network, wherein the PP network parameters comprise at least one shared parameter that is common to at least two PP networks and at least one specific parameter that is not shared between two or more PP networks, encoding clusters of latent variable levels and the association between clusters and PP networks, and encoding values of each cluster of latent variable levels based on the distribution over latent variables using the PP network associated with the cluster.

According to an aspect of at least one embodiment, a decoding apparatus comprises a processor configured to obtain neural networks comprising at least a plurality of PP networks and a synthesis network and parameters related to the neural networks, the parameters related to the PP networks comprising at least one shared parameter that is common to at least two PP networks and at least one specific parameter that is not shared between two or more PP networks, obtain clusters of latent variable levels and associations between clusters and PP networks, obtain, for each cluster, values of latent variables based on determined distribution given by the associated PP network, upsample the obtained values, and produce an output data by feeding the upsampled values to the synthesis network, wherein the latent variables are arranged in hierarchical levels and wherein a PP network is associated with a cluster of levels of latent variables or with a single level of latent variables.

According to an aspect of at least one embodiment, an encoding apparatus comprises a processor configured to perform a clustering of levels of latent variables arranged in a hierarchy, determine, for each cluster, a PP network and parameters of the PP network associated with the cluster, training a hybrid implicit neural representation model to produce a synthesis network, encode the PP Networks, the PP network parameters and the synthesis network, wherein the PP network parameters comprise at least one shared parameter that is common to at least two PP networks and at least one specific parameter that is not shared between two or more PP networks, encode clusters of latent variable levels and the association between clusters and PP networks, and encode values of each cluster of latent variable levels based on the distribution over latent variables using the PP network associated with the cluster.

One or more of the present embodiments also provide a computer readable storage medium having stored thereon instructions for performing at least part of any of the methods described above. One or more embodiments also provide a computer program product including instructions for performing at least part of any of the methods described above.

Embodiments are described within the context of 2D image compression but also apply to many other signals, such as 2D video, 3D scenes and objects or haptic signals. Furthermore, these approaches have a far lower computational complexity than end-to-end neural compression approaches.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF SUMMARY OF THE DRAWINGS

The present disclosure may be better understood by consideration of the detailed description below in conjunction with the accompanying figures in which:
Figure 1 is a block diagram of an example system, according to which aspects of the present embodiments can be implemented.
Figure 2 is a diagram illustrating an example INR network.
Figure 3 is a block diagram of an example video encoder.
Figure 4 is a block diagram of an example video decoder.
Figure 5 is a diagram illustrating a hybrid INR model.
Figure 6 is a block diagram illustrating an example video encoder applying a hybrid INR model.
Figure 7 is a block diagram illustrating an example video decoder applying a hybrid INR model.
Figure 8 is a diagram illustrating prediction of a latent variable distribution, using a spatial context .
Figure 9 is a block diagram illustrating an example video encoder applying a predictive hybrid INR model.
Figure 10 is a block diagram illustrating an example video decoder applying a predictive hybrid INR model.
Figure 11A illustrates an example of a bitstream encoding of a hybrid INR according to the first embodiment.
Figure 11B illustrates an example of a bitstream encoding of a hybrid INR according to the second embodiment.
Figure 11C illustrates an example of a bitstream encoding of a hybrid INR according to the third embodiment that combines the two first embodiments.
Figure 12A illustrates an example process for encoding data according to the first embodiment.
Figure 12B illustrates an example process for encoding data according to the second embodiment.
Figure 12C illustrates an example process for encoding data according to the third embodiment.
Figure 13A illustrates an example process for decoding data according to the first embodiment.
Figure 13B illustrates an example process for decoding data according to the second embodiment.
Figure 13C illustrates an example process for decoding data according to the third embodiment.
Figure 14 illustrates an example architecture of a decoder using the COOL-CHIC principles according to embodiments.

It should be understood that the drawings are for purposes of illustrating examples of various aspects, features and embodiments in accordance with the present disclosure and are not necessarily the only possible configurations.

### DETAILED DESCRIPTION

Embodiments described hereafter are related to hybrid INR models using hierarchical grid levels of latent variables where some parameters of probability prediction networks of the grid levels are shared. The sharing may be based on clustering levels or on sharing common parameters for the probability prediction network or both.

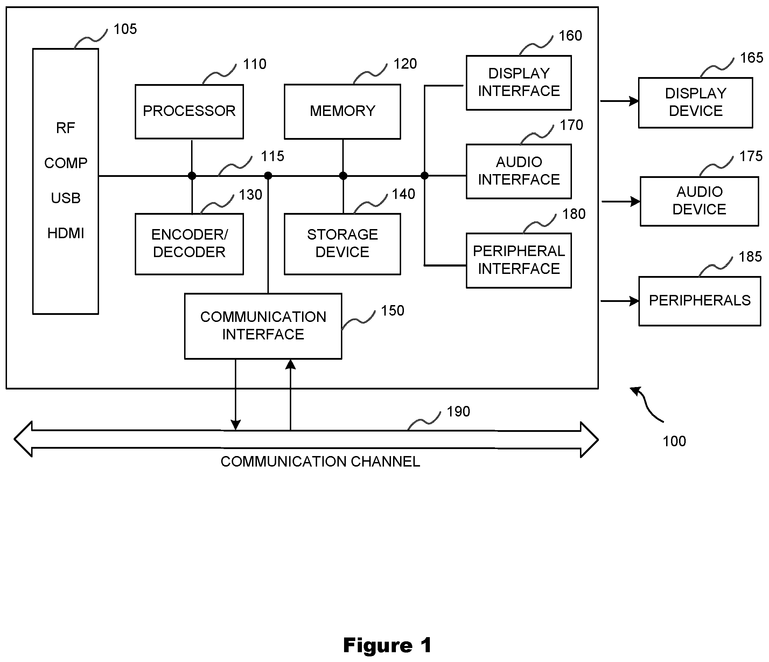

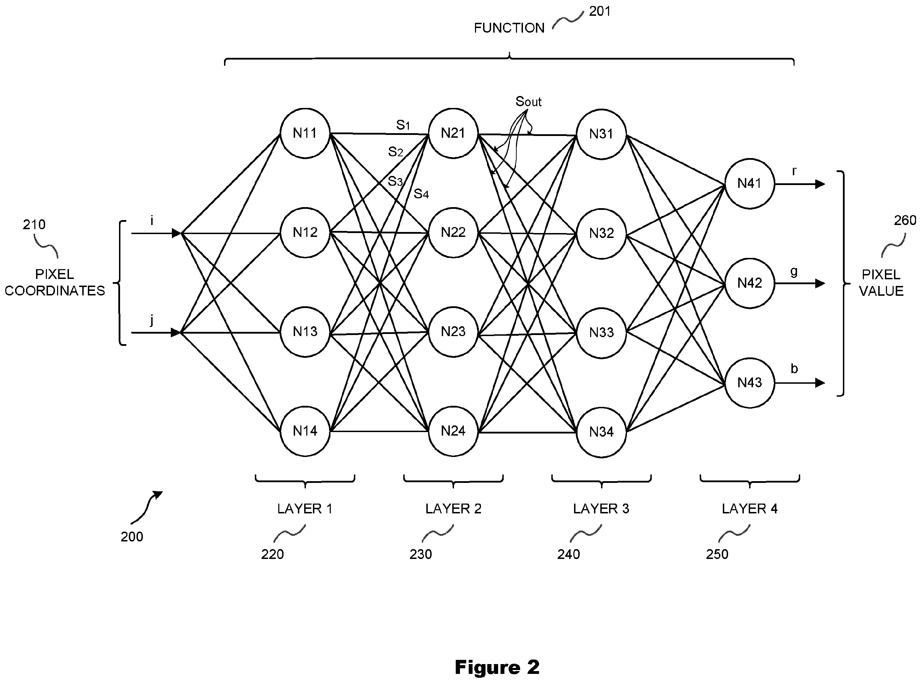

A system for encoding and decoding multimedia content (e.g. images, videos, 3D objects or haptic signals), with which various aspects and examples described herein may be implemented, is generally described in reference to Figure 1, followed by a description of the aspects of the present disclosure in reference to Figures 2 to 14.

**Figure 1** is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although Figure 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a nonstreaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. On the other hand, an autoencoder is a neural network that is trained to map input images (video frames) into respective sets of latent variables and then map back the sets of latent variables to approximated versions of the input images. During training, the autoencoder parameters are optimized to minimize a rate-distortion cost function. Thus, using the trained autoencoder, encoding an image involves mapping the image into a set of latent variables and decoding the image involves mapping the set of latent variables into a reconstructed version of the image. Since autoencoders are generically trained (that is, their training is based on a large number of images) to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for the applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For simplicity of the presentation, aspects of INR network applications are described herein with respect to images (e.g., video frames); however, these aspects are extendable to other data frames, such as those representing surfaces of objects and volumetric data that may be changing overtime.

**Figure 2** is a diagram illustrating an example INR network. In such context, an INR network 200 parameterizes a signal as a function 201, which takes coordinates 210 as input and outputs values 260 of a signal at these coordinates. INR networks have recently been applied to image, videos, 3D objects or haptic signals among other applications. In such context, the inputs 210 can be pixel coordinates (*c*₁*, c*₂) and the INR may output 260 the color values (*r, g, b*) or (*y, u, v*) of the input pixel. The input coordinates may be modified by a transformation before being used as input for the neural network. This transformation can be a Fourier mapping, coordinate transformation, normalization etc. The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network is for example a neural network composed of multiple layers, each layer includes multiple nodes (denoted by circles). Generally, the architecture of a neural network is characterized by the number of layers, the number of layers' nodes, and by the way the layers' nodes are connected. In the example of Figure 2, the network 200 has four layers 220, 230, 240, 250 that are fully connected. For example, the first layer 220 includes four nodes N11, N12, N13, and N14 that each receives the coordinate values (*c*₁, *c*₂) 210 of a pixel *x* and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel *x,* respectively, *r, g,* and *b* (or color component values of any other color model, such as *y*, *u*, and *v*). Each node in the network 200 represents an operator that generates an output signal based on the node's inputs. For example, node N21 of the second layer 230 receives as an input the output signals of nodes N11, N12, N13, and N14, respectively, *s*₁, *s*₂, *s*₃, and *s*₄. These inputs are translated into an output signal *sₒᵤₜ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ (1) where, *L* denotes the number of input signals (i.e., the number of nodes from the previous layer that connect to the node), *s =* {*sᵢ* : *i* = 1 *to L*} denotes the node's input signal vector, *sₒᵤₜ* denotes the node's output signal, *p* = {*pᵢ* : *i* = 0 *to L*} denotes the node's parameter vector (or weight vector), and A denotes an activation function (e.g., ReLU, Sigmoid, or Tanh). Each neural layer can be described as a function that first multiplies the input by a tensor, adds a vector called the bias and then applies a nonlinear function on the resulting values. The shape (and other characteristics) of the tensor and the type of non-linear functions are called the architecture of the network. We will denote the values of the tensor and the bias by the term "weights". The weights (and parameters of the activation functions, if such parameters exist) of respective nodes are collectively referred to as the parameters *θ* of the network 200. These parameters *θ* are determined through a training process. The network operation, denoted by *f_{θ},* is therefore defined by the network parameters *θ*. Once the parameters are learned, they may be encoded to create a bitstream allowing to reconstruct the input signal.

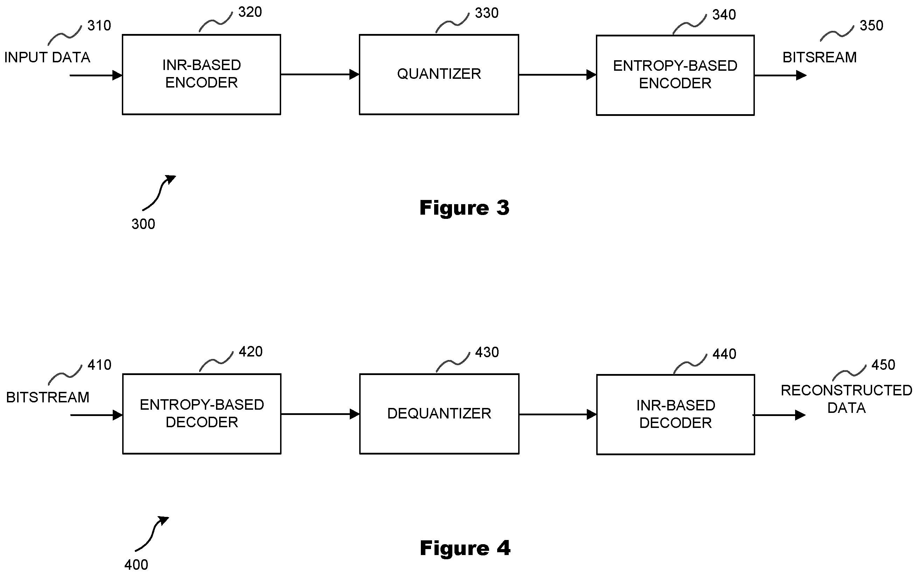

Hence, an INR network 200 is trained to predict a pixel value of an image, *x*(*i, j*)*,* based on the pixel's coordinates (*i, j*) - that is, *f_{θ}* (*i, j*) *=* (*r, g, b*) (or *f_{θ}* (*i, j*) *=* (*y, u, v*)). During a training phase of an INR network 200, the parameters *θ* (or a subset of them) are determined. This is done via an optimization process through which the parameters *θ* that minimize a loss function can be determined. For example, for an image x of size (*M* × *N*)*,* the following cost function can be used: $Cost = D \left(x, {f}_{θ}\right) + λR \left(θ\right)$ (2) where, *D* is a distortion measure, measuring the fidelity of the estimated pixel values, provided by *f_{θ},* relative to the ground truth, that is, the corresponding pixel values from the original image, denoted by *x, R* is the resulting bitrate of the encoded parameters *θ* (e.g., encoded by quantization and entropy coding as discussed with respect to Figure 3) and *λ* is a trade-off parameter that can be set to determine the balance between *D* and *R.* Note that the distortion measure *D* can be any metric that measure the distance (or similarity) between the original image *x* and its estimated version provided by *f_{θ},* such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ (3) where, *N* and *M* are the width and height of the image *x* that the INR network is trained to predict. The optimization of the network parameters *θ*, according to equation (2), is typically performed by a machine learning optimization technique, applying, for example, a batch gradient descent algorithm. Following the training of the INR network 200 and using the optimal parameters *θ* (obtained via the optimization process), the INR network can be applied to predict a pixel value based on its corresponding coordinate values.

To decompress the signal, *f_{θ}* is evaluated at all relevant coordinates. These coordinates can be selected at decoding. A typical choice would be all pixel coordinates for an image or video. As an example, for a 256x256 pixel image, these coordinates could be all pairs (*i*, *j* ) for all *i* ∈ 0,1, ...,255 and *j* ∈ 0,1, ...,255. Other choices are possible, for example to upsample, downsample or extend the original image.

The bitstream encoding a signal is thus created by encoding the parameters of the neural network. This is typically done by a neural compression codec such as Neural Network Coding (NNC)/ ISO/IEC 15938-17 or MPEG-7 part 17 or simply by quantizing the parameters and/or pruning some neurons from the network and using conventional entropy coding such as arithmetic coding or auto-regressive models.

Using INR networks for the application of encoding and decoding images is further described with respect to Figures 3 and 4.

**Figure 3** is a block diagram of an example video encoder. In the example of Figure 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f_{θ},* representative of the INR network, to determine the optimal network parameters *θ*. For example, for an input image with dimensions *W* and *H, W* times *H* pairs of pixel coordinates (*i*, *j*) and corresponding pixel values *x*(*i, j*) can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded for example using neural compression codecs such as Neural Network Coding (NNC)/ ISO/IEC 15938-17 or MPEG-7 part 17. The bitstream 350 can be used by a decoder to reconstruct the input image 310, as described in reference to Figure 4.

**Figure 4** is a block diagram of an example video decoder. The decoder 400 generally reverses the operation of the encoder 300 of Figure 3. In the example of Figure 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f_{θ}* using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions *W* = 256 by *H* = 256 based on the corresponding coordinates. At the decoder 400, pixel values of the image can be predicted by evaluating the trained INR network using: 1) the full coordinate set used for training, including all pairs of *i* ∈ 0,1, ...,255 and *j* ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

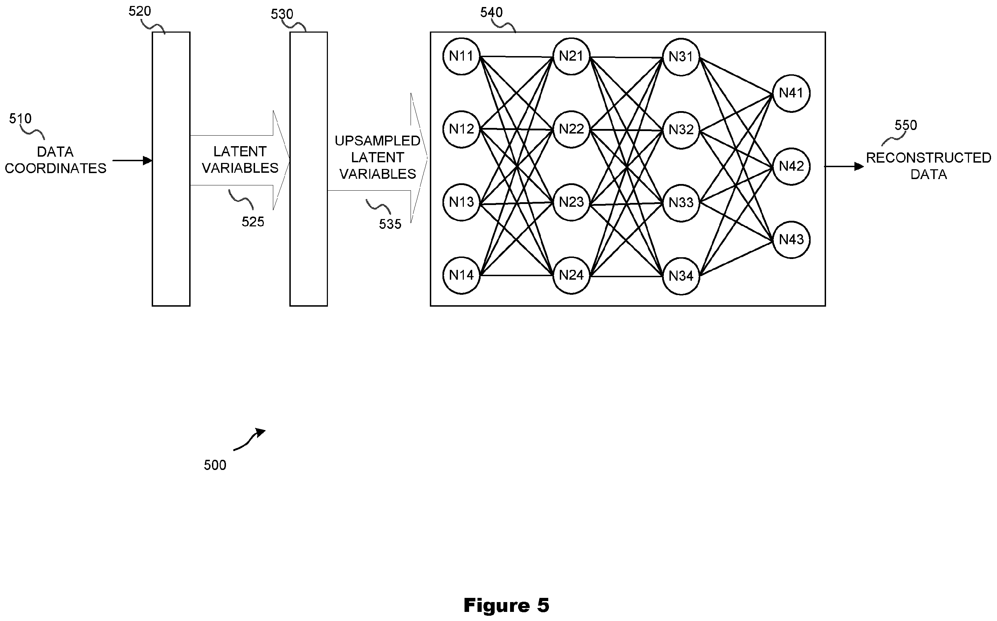

Hybrid INR models have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to Figure 5.

**Figure 5** is a diagram illustrating a hybrid INR model. In an aspect, this hybrid INR model 500 can be applied by the INR-based encoder 320 of Figure 3 and the INR-based decoder 440 of Figure 4. In the example of Figure 5, during the encoding of input data (that is, the training of the model 500), the input data's coordinates 510 are first mapped, by a mapping unit 520, into respective latent variables 525, i.e., vector of latent features. The mapping can be implemented for example by a lookup table, a partition of the signal, a hash function and/or a linear combination of features or directly learned these features. The mapping may also involve any transformation, such as a Fourier transformation, a coordinate transformation, a normalization transformation, or a combination thereof. The latent variables 525 may have different resolutions and may need to be upsampled, for example by an up-sampling unit 530, resulting in upsampled latent variables 535. The upsampled latent variables are used as an input to an INR synthesis network 540 (e.g., such as INR network 200), trained to produce the reconstructed data 550. In a hybrid INR model 500 the latent variables 525 are trained together with the parameters *θ* of the INR network 540, resulting in optimal network parameters and optimal latent variables. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR model 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

In hybrid INR models, the latent variables, denoted by *y*, are typically the largest contributor to the bitstream size (several orders of magnitude larger than that contributed by the INR network parameters). One approach to reduce the transmission cost of these latent variables is to entropy code these variables based on their learned distributions.

The attention given to the entropy coding of the latent features appears on the new formulation of the loss function: ${min}_{\left(\hat{y}, θ, ψ\right)} D \left(x,{f}_{θ}\left(upsample\left(\hat{y}\right)\right)\right) - λ {log}_{2} {p}_{ψ} \left(\hat{y}\right) ,$ (4) where *ŷ* is the quantized latent and *p*_{ψ} (*ŷ* ) is the discrete distribution over the quantized latent features. The distribution of these latent features can for example be a known distribution or estimated using an auto regressive probability model.

According to Equation (4), minimizing the rate associated to the transmission of the compressed version of the frame relies on minimizing the rate associated to the latent features. This can be achieved by reducing the amount of information contained in the latent features risking a poor reconstruction of the sent frame and an increase of distortion in ***x̂**=f_{θ} ("upsample"* (*ŷ* )). In other words, less information in *ŷ* results in more distortion in ***x̂**.* It may also be achieved by estimating the distribution of the sent latent as close as possible to the real (unknown) one using a well-chosen probability model. If that probability model is trained, it must be included in the bitstream.

Due to its high dimension the modeling of the joint distribution of *ŷ* is usually untrackable. Instead it is typical to factorize *p*_{ψ}, (*ŷ* ) and use a set of C context latents ${c}_{ijk}^{s}$ such that the distribution of each quantized latent $\hat{{y}_{ιjk}}$ is conditioned on C spatially neighboring latents that have already been decoded and selected in a way to introduce as little sequentiality as possible to allow parallel decoding of the L channels, for example in a wavefront-like approach. The position of the latent considered must be known by the emitter and the receiver. The factorization of *p*_{ψ} (*ŷ* ) is given by: ${p}_{ψ} \left(\hat{y}\right) = {\prod }_{i , j , k} {p}_{ψ} \left(\left.\hat{{y}_{ιjk}}\right|{c}_{ijk}^{s}\right) ,$

Where ${p}_{ψ} \left(\left.\hat{{y}_{ιjk}}\right|{c}_{ijk}^{s}\right)$ denotes the conditional probability of one latent value at position (i, j, k) conditioned on its spatial context ${c}_{ijk}^{s}$. (i, j) represents the spatial coordinate and k represents a latent feature.

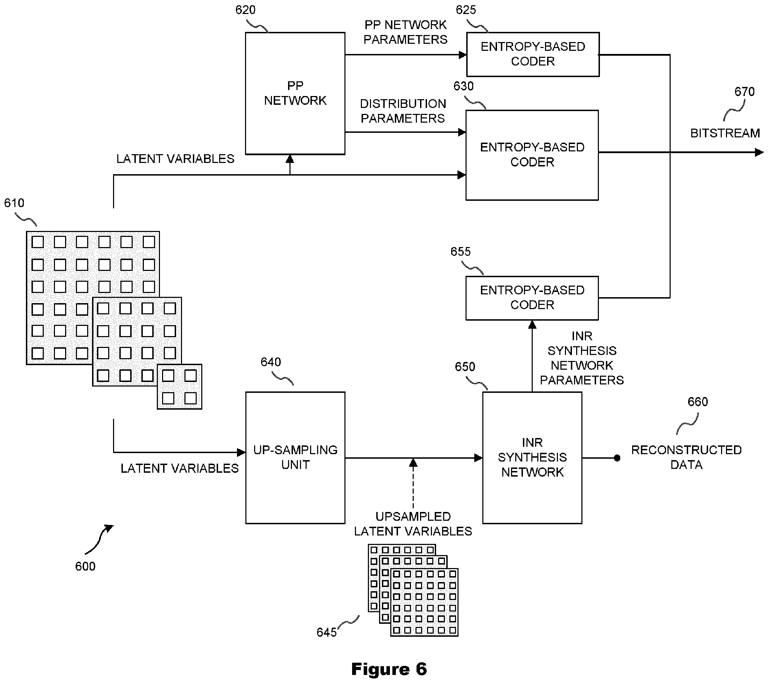

An example of hybrid INR model named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a highresolution representation (that captures the fine details of the image). Principles of the hybrid INR model proposed in Ladune are described below in reference to Figures 6-7.

**Figure 6** is a block diagram illustrating an example video encoder 600 applying a hybrid INR model. The encoder 600 includes a probability prediction (PP) network 620, an upsampling unit 640, an INR synthesis network 650, and entropy-based coders 625, 630, 655. The encoder 600 is configured to process latent variables 610 (e.g., latent variables 525 generated by the mapping unit 520 of Figure 5). The encoder 600 up-samples, by the upsampling unit 640, the latent variables. Based on these upsampled latent variables 645 the INR synthesis network 650 is trained (overfitted) to produce reconstructed data 660 (e.g., a reconstructed image of a video frame). The training results in optimal INR synthesis network parameters *θ* that are coded, by the entropy-based coder 655, into the bitstream 670. In an inference mode, reconstructing the data (e.g., by a decoder 700) involves feeding the trained INR synthesis network, defined by the optimal network parameters *θ*, with the upsampled latent variable. And so, in addition to the network parameters *θ*, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by ψ, determined during the training of the PP network 620. The entropy-based coder 625 codes these PP network parameters into the bitstream 670. Note that in the example of Figure 6, while the entropy-based coder 630 that codes the latent variables relies on their learned respective distributions, the other entropy-based coders 625, 655 that code the PP network parameters and the INR synthesis network parameters rely on respective non-learned distributions. In an aspect, for some of the latent variables respective non-learned distributions can be used by the entropy-based coder 630. These non-learned distributions may be fixed distributions or may be distributions that was learned with respect to other latent variables (e.g., latent variables representing data from previous frames).

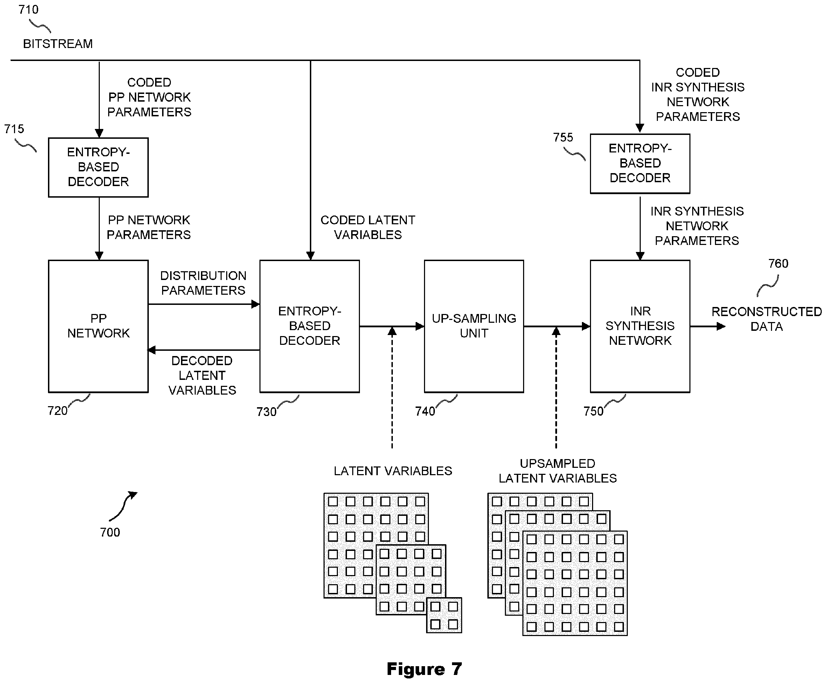

**Figure 7** is a block diagram illustrating an example video decoder applying a hybrid INR model. The decoder 700 includes a PP network 720, an up-sampling unit 740, an INR synthesis network 750, and entropy-based decoders 715, 730, 755. The PP network 720 produces distribution parameters of respective latent variables. The PP network 720 operates based on learned PP network parameters ψ, determined during the training of the PP network 620. The entropy-based decoder 715 decodes these PP network parameters from the bitstream 710. Based on the produced 720 distribution parameters, the entropy-based decoder 730 decodes the latent variables from the bitstream 710. Already decoded latent variables are provided back to PP network to serve as a context in producing the distribution parameters of the currently decoded latent variable. The decoded latent variables are then upsampled by the up-sampling unit 740 (as performed by the up-sampling unit 640 at the encoder 600). Fed by the up-sampled latent variables, the INR synthesis network 750 reconstructs the data 760 (e.g., a reconstructed image of a video frame) it is trained to synthesize based on the INR synthesis network parameters, decoded from the bitstream 710 by the entropy-based decoder 755.

The operation of the hybrid INR model is further explained with respect to an image ***x*** of a video frame, however, ***x*** may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR synthesis network 650, 750 utilizes a hierarchical representation that includes multiple layers of different spatial resolutions 610. Each layer represents an image ***x*** with a width *W* and a height *H* with a corresponding level of detail. Formally, the discrete latent variables, denoted by *ŷ*, can include *K* layers of latent variables: *ŷ =* {*ŷₖ , k =* 0: (*K* - 1)}. Each layer *ŷₖ* is of width *W*/2*^{k}* and of height *H*/2*^{k}.* During the up-sampling 640, each layer *ŷₖ* may be upsampled by a factor of 2*^{k}* (using any interpolation method) to obtain the upsampled layer version, denoted by *ẑₖ* . Together, the upsampled layers, *ẑ =* {*ẑₖ , k =* 0: (*K* - 1)}, result in a dense 3D representation 645 of dimension *W* by *H* by *K.* Thus, the INR network 650 can be trained based on *W* by *H* inputs of *ẑ*(i, j), where each input can include up to *K* latent variables, that is, *ẑ*(i, j) = {*ẑ*(i, j, *k*)*, k =* 0: (*K* - 1))}. For example, the trained INR network 750 can be used to predict a reconstructed pixel *x̂*(*i,j*)*,* of the original pixel *x*(*i,j*)*,* by *x̂*(*i, j*) *= f_{θ}* (*ẑ*(i*,* j)). In an aspect, depending on the desired bitrate, not all the layers of the latent variables may be used to represent (code) an image ***x***.

When compressing an image ***x*** the goal is to do so while minimizing a cost function, as discussed with respect to equation (2). In the case of a hybrid INR model, the cost of coding an image can be expressed as: $Cost = D \left(x,{f}_{θ}\left(\hat{z}\right)\right) + λR \left(\hat{y}, θ, ψ\right) ,$ (4) where ***x*** denotes an image to be coded with *H* hight, *W* width, and *V* color channels; where *ŷ* denotes the quantized latent variables and *ẑ* denotes their upsampled version; where *f_{θ}* denotes the INR synthesis network 650, 750 and *θ* denotes the INR synthesis network parameters; where *f*_{ψ} denotes the PP network 620, 720 and ψ denotes the PP network parameters; where *D* denotes a distortion metric measuring the distance between the image ***x*** and its reconstructed version ***x̂**,* as produced by the INR synthesis network *f_{θ}* from the upsampled latent variables *ẑ*, that is, ***x̂*** *= f_{θ}*(*ẑ*); and where *R* denotes the rate (in bits per pixel) measuring the number of bits that are required to represent a pixel in a bitstream, that is, the number of bits that are required to represent *ŷ*, *θ*, and ψ. The distortion *D* and the rate *R* are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

The objective, thus, is to find the latent variables *ŷ*, the INR synthesis network parameters *θ*, and the PP network parameters ψ that minimize the coding cost, as follows: ${min}_{\hat{y} , θ , ψ} Cost = {min}_{\hat{y} , θ , ψ} \left(D\left(x,{f}_{θ}\left(\hat{z}\right)\right)+λR\left(\hat{y}, θ, ψ\right)\right) .$ (5)

Since the contribution of the INR synthesis network parameters *θ* and the PP network parameters ψ to the rate R is not as significant as that of the latent variables *ŷ*, only the latter can be considered when minimizing the coding cost, that is, *R*(*ŷ*, *θ*, ψ) ≈ *R*(*ŷ*). Furthermore, *R*(*ŷ*) can be replaced by the cross entropy. Thus, equation (5) can be replaced by: ${min}_{\hat{y} , θ , ψ} Cost = {min}_{\hat{y} , θ , ψ} \left(D\left(x,{f}_{θ}\left(\hat{z}\right)\right)-λ {log}_{2} {P}_{ψ}\left(\hat{y}\right)\right) ,$ (6) where *P*_{ψ}(*ŷ*) is the joint distribution of the latent variables *ŷ*. According to Equation (6), minimizing the cost involves minimizing the rate associated with the latent variables. This can be achieved by reducing the amount of information contained in the latent variables, at the price of a less accurate reconstruction, as less information in *ŷ* is likely to increase the distortion D. Alternatively, minimizing the cost can be achieved by obtaining estimates of the distributions of the respective latent variables, as described herein.

Due to the high dimensionality of the latent variables, modeling of the joint distribution of *ŷ*, *P*_{ψ} (*ŷ*)*,* is not tractable. Instead, *P_{ψ}* (*ŷ*) can be factorized as follows: ${P}_{ψ} \left(\hat{y}\right) = {\prod }_{i , j , k} {p}_{ψ} \left({\hat{y}}_{ijk}\left|{c}_{ijk}^{s}\right.\right) ,$ (7) where ${p}_{ψ} \left({\hat{y}}_{ijk}\left|{c}_{ijk}^{s}\right.\right)$ denotes a discrete conditional probability of a latent variable at position (i, j, k) conditioned on a corresponding spatial context ${c}_{ijk}^{s}$. Where (i, j) represents the spatial coordinate of a latent variable in a layer *k*. The spatial context ${c}_{ijk}^{s}$ may be provided by spatially neighboring latent variables that have already been decoded and preferably selected in a way that enables parallel decoding of the different layers of the latent variables (e.g., in a wavefront-like approach).

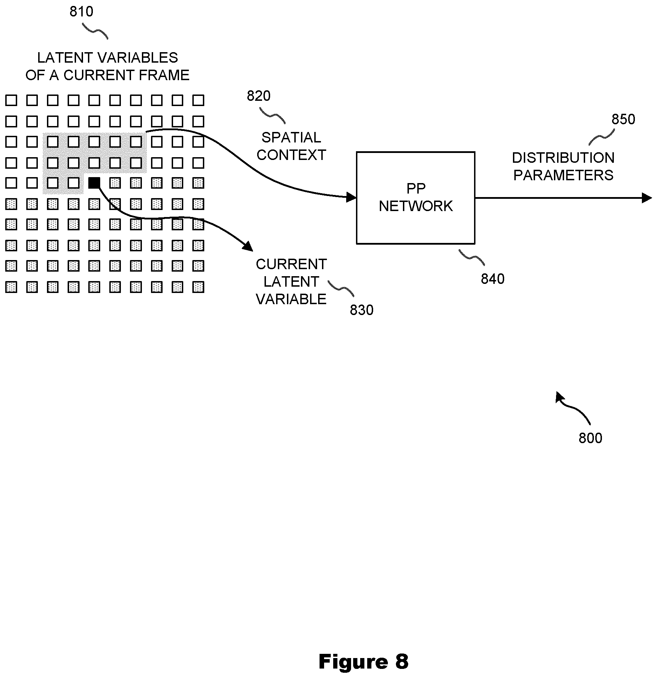

In practice, the discrete distribution ${p}_{ψ} \left({\hat{y}}_{ijk}\left|{c}_{ijk}^{s}\right.\right)$ can be modeled by integrating the continuous distribution of the non-quantized latent variable, denoted by *g*(*y*) and modeled as a Laplacian distribution, for example. Thus, the PP network 620 learns the expectation parameter, µᵢⱼₖ, and the scale parameter, σᵢⱼₖ, based on the context ${c}_{ijk}^{s}$. Accordingly, the probability of a latent variable *ŷ*ᵢⱼₖ can be expressed as: ${p}_{ψ} \left({\hat{y}}_{ijk}\left|{c}_{ijk}\right.\right) = {\int }_{{\hat{y}}_{ijk} - 0.5}^{{\hat{y}}_{ijk} + 0.5} g \left(y\right) dy ,$ (8) where g ≅ 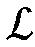 (µᵢⱼₖ, σᵢⱼₖ) denotes a Laplacian distribution. Thus, in the case of a Laplacian distribution, for example, given a context cᵢⱼₖ, the PP network 620 can be trained to produce the corresponding distribution parameters, that is, {µᵢⱼₖ, σᵢⱼₖ} = f_{ψ} (cᵢⱼₖ) as described next with respect to Figure 8.

**Figure 8** is a diagram illustrating prediction of a latent variable distribution, using a spatial context 800. For simplicity of the presentation, only one layer of the latent variables 810 is illustrated, however, processes applied to this layer can be similarly applied to the other layers. The example of FIG. 8 illustrates the process of predicting a distribution of a current latent variable (indicated by a black square) to be coded (e.g., by encoder 600 or 900) or to be decoded (e.g., by decoder 700 or 1000). However, when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable at position (*i, j, k*), latent variables can be selected within a neighborhood located relative to position (*i, j, k*) (e.g., latent variables grouped by the gray background in FIG. 8) to form the spatial context ${c}_{ijk}^{s}$. The obtained spatial context, ${c}_{ijk}^{s}$, can then be used by the PP network 840 to predict the distribution of the current latent variable. The distribution of the current latent variable is predicted by estimating the parameters of that distribution (e.g., {µᵢⱼₖ, σᵢⱼₖ}). To that end, in the encoder, the PP network 840 is trained to produce, for each latent variable, the distribution parameters 850 based on the respective spatial context. This training can be done by minimizing the coding cost expressed in equation (6). The training of the PP network 840 results in the PP network parameters ψ. In the decoder, the trained PP network 840 is operated in an inference mode to produce, for each latent variable, the distribution parameters 850 from the respective spatial context. The trained PP network 840 operates based on the PP network parameters ψ determined by the encoder during training and provided to the decoder in the bitstream.

In the case of a video stream, for example, a hybrid INR model can be used to represent each image of a video frame by a set of latent variables, *ŷ*, that (together with the PP network parameters ψ and the INR network parameters θ) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR model applicable to individual frames (see, Leguay et al., Cool-chic video: Learned video coding with 800 parameters, Data Compression Conference (DCC) 2024, IEEE, pp 23-32, 2024, hereinafter "Leguay").

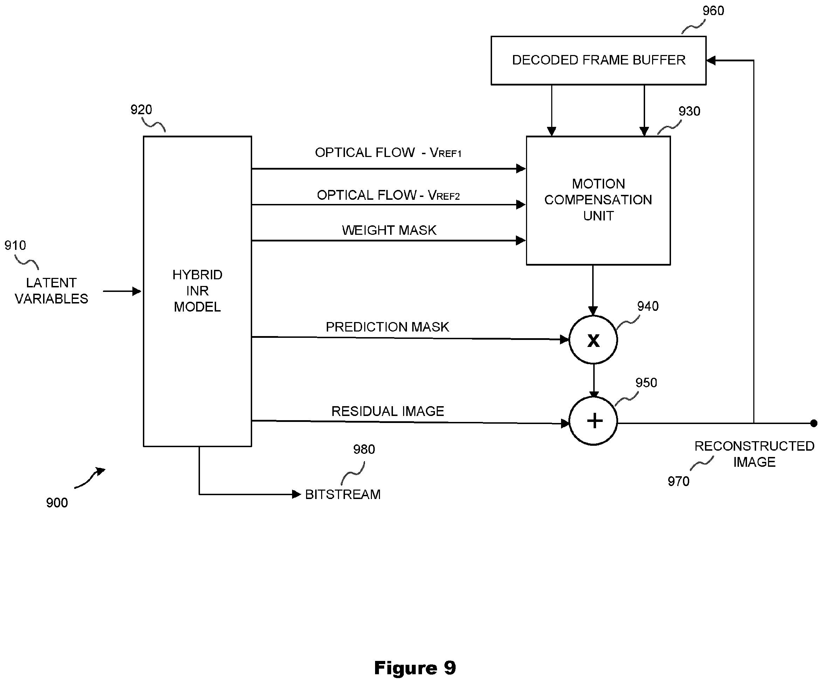

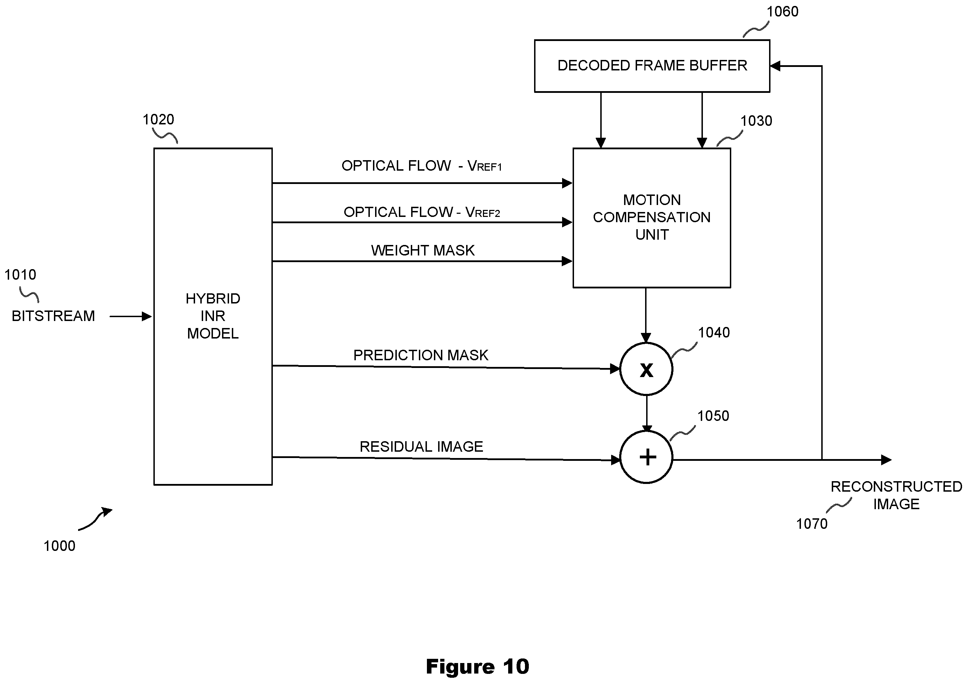

Principles of the predictive hybrid INR model proposed in Leguay are described next in reference to Figures 9 and 10. The operation of the predictive hybrid INR model is explained herein with respect to an image ***x*** of a video frame, however, ***x*** may represent other types of data (such as a surface or a volume) that can be associated with a frame. Note that latent variables representative of data regions (e.g., pixels) from a data frame (e.g., a video frame) referred to herein also as corresponding to that data frame.

**Figure 9** is a block diagram illustrating an example video encoder 900 applying a predictive hybrid INR model. The encoder 900 receives, as an input, latent variables 910 and outputs a bitstream 980. The encoder 900 includes a hybrid INR model 920, a motion compensation unit 930, a multiplier 940, an adder 950, and a decoded frame buffer 960. The hybrid INR model 920 generally operates (in a training mode) as the hybrid INR model described in reference to FIG. 6. However, in this case the hybrid INR model is trained to produce two optical flows, *v*_{*ref*1} and *v*_{*ref*2}*,* a weight mask *β*, a prediction mask ∝, and a residual image **r.** The optical flows represent the pixel-wise motion between respective reference frames (already reconstructed images 970, stored in the decoded frame buffer 960) and the current frame. And so, the motion compensation unit 930 can use these optical flows to generate a prediction, denoted by ***x̃**,* of the currently coded image ***x**,* as follows: ${x}^{˜} = β ⋅ warp \left({\hat{x}}_{ref 1}, {v}_{ref 1}\right) + \left(1-β\right) ⋅ warp \left({\hat{x}}_{r ef 2}, {v}_{ref 2}\right) ,$ (9) where *warp* is an operator that warps (i.e., spatially maps) an image into another image based on motion vectors given by an optical flow. Specifically, a first reference image, ***x̂***_{*ref*1}*,* is warped into a first prediction, ***x̃***₁ = *warp* (***x̂***_{*ref*1}*, v*_{*ref*1}) and a second reference image, ***x̂***_{*ref*2} is warped into a second prediction, ***x̃***₂ *= warp*(***x̂***_{*ref*2}*, v*_{*ref*2})*.* Using elementwise multiplication, denoted by "˙". the two predictions are then blended by the mask *β*, yielding the prediction image ***x̃**.* As illustrated in FIG. 9, the prediction image ***x̃*** (output of the motion compensation unit 930) is then corrected by the residual image r, as follows: $\hat{x} = r + ∝ ⋅ {x}^{˜} ,$ (10) where, the prediction mask ∝ is a binary mask that can be used to mask out 940 a prediction pixel if it does not reliably predict the corresponding pixel in ***x***. Adding 950 the masked prediction image, ∝· ***x̃***, to the residual image ***r*** produces the reconstructed image 970, ***x̂***.

Hence, the two optical flows, *v*_{*ref*1} and *v*_{*ref*2}*,* the weight mask *β*, the prediction mask ∝, and the residual image ***r*** can be learned by minimizing the coding cost expressed in equation (4), where *f_{θ}* (*ẑ*) *= **x̂*** = ***r***+∝· ***x̃**.* Note that the predictive hybrid INR model, illustrated in FIG. 9, can be applied using only one reference image or any number of reference images available in the decoded frame buffer 960. In such a case equation (9) can be expressed as: ${x}^{˜} = {\sum }_{q = 1}^{Q} {β}_{q} ⋅ warp \left({\hat{x}}_{ref q}, {v}_{ref q}\right) ,$ (11)

Where, *Q* is the number of reference images used; where ${\sum }_{q = 1}^{Q} {β}_{q}$ is equal to an all-ones matrix. where *v*_{*ref*q} is the optical flow with respect to ***x̂***_{*ref*q}*,* that is, the qth reference image. In a variant, the weight mask *β*, the prediction mask ∝, or both can be removed from the predictive hybrid INR model.

**Figure 10** is a block diagram illustrating an example video decoder 1000 applying a predictive hybrid INR model. The decoder 1000 receives, as an input, a bitstream 1010 and outputs reconstructed images 1070. The decoder 1000 includes a hybrid INR model 1020, a motion compensation unit 1030, a multiplier 1040, an adder 1050, and a decoded frame buffer 1060. The hybrid INR model 1020 generally operates (in an inference mode) as the hybrid INR model described in reference to FIG. 7. However, in this case the hybrid INR model produces two optical flows, *v*_{*ref*1} and *v*_{*ref*2}*,* a weight mask *β*, a prediction mask ∝, and a residual image r. The optical flows represent the pixel-wise motion between respective reference frames (already reconstructed images 1070, stored in the decoded frame buffer 1060) and the current frame. And so, the motion compensation unit 1030 can use these optical flows to generate a prediction, denoted by ***x̃**,* of the currently decoded image ***x**,* as expressed by equation (9). As illustrated in FIG. 10, the prediction image ***x̃*** (output of the motion compensation unit 1030) is then corrected by the residual image ***r***, as shown by equation (10). Adding 1050 the masked prediction image, ∝· ***x̃***, to the residual image ***r*** produces the reconstructed image 1070, ***x̂**.*

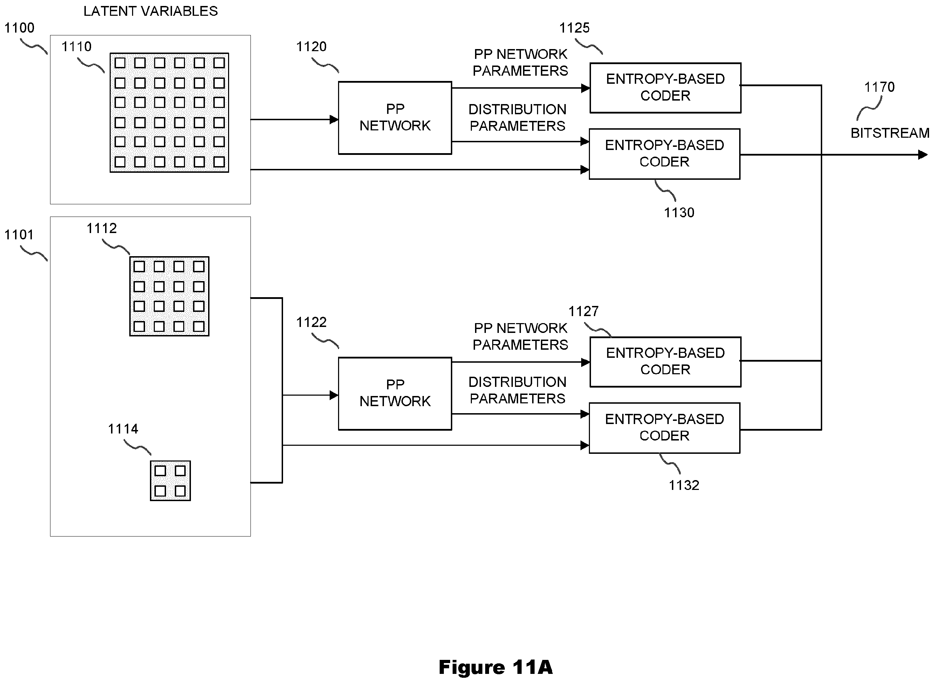

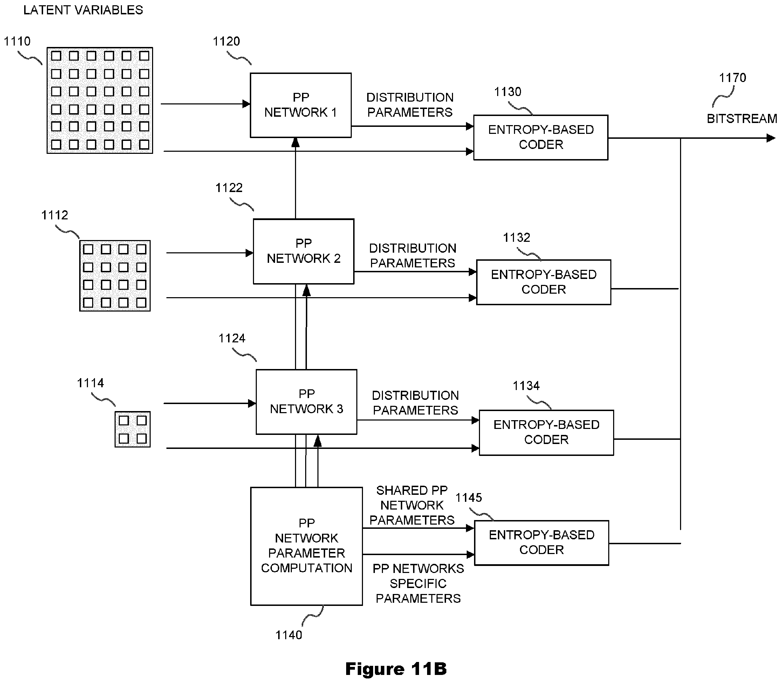

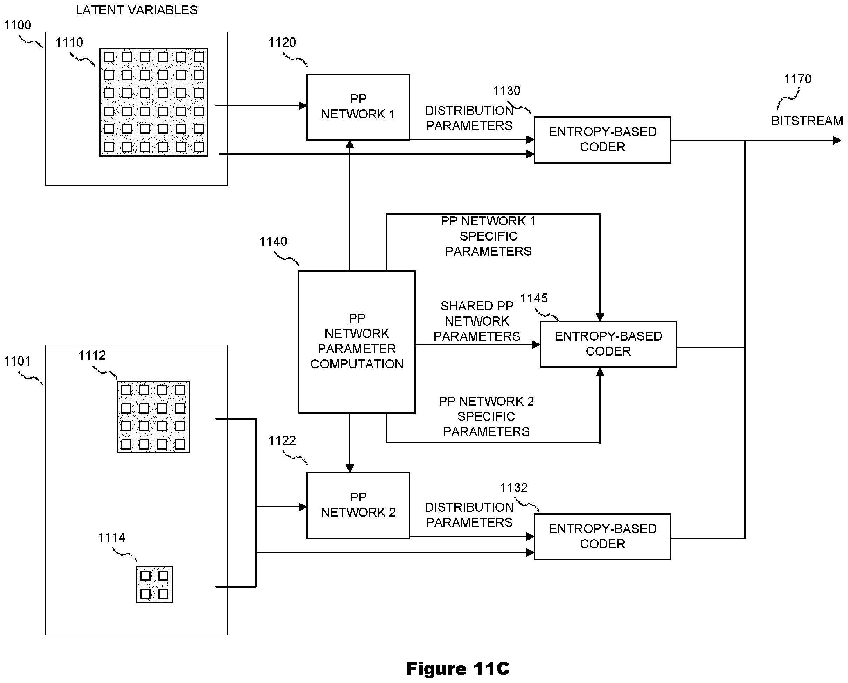

Embodiments described hereafter have been designed with the foregoing in mind and propose to share some parameters when using a hybrid INR having multi-level probability prediction networks. Several embodiments are described herein. In a first embodiment, multiple probability prediction networks are used and a clustering of the latent variables allows to share one probability prediction network among multiple (clustered) levels of latent variables, as illustrated in Figure 11A. In a second embodiment, one probability prediction network is used for each level of latent variables but information related to the probability prediction networks is shared, as illustrated in Figure 11B. A third embodiment illustrated in Figure 11C combines the two first embodiments and performs clustering of the latent variables to share one probability prediction network among multiple (clustered) levels of latent variables and in addition determines shared information related to the multiple probability prediction networks.

We describe an encoding and a corresponding decoding procedure for hybrid-INR in general. We also describe an embodiment with the COOL-CHIC algorithm.

These embodiments result in a more efficient encoding of the bitstream. Indeed, the latent variables may be very different for different levels, with high-level feature level (large values of K) containing dense, low-frequency information and low-level feature levels containing very sparse, high-frequency information. However, feature levels that are close to each other are likely to have similar properties, such as similar distribution. As an example, when using 4 latent layers, the two coarser layers (low frequency information) are likely to both contain significantly fewer 0 values than the two highest resolution layers (high frequency information). This property is used to perform the sharing of data in the three embodiments.

In former solutions, having a unique PP network, that must either be able to handle all layers or a single layer, makes training difficult and may lead to a large network to encode all possible situations. This may lead to both higher bitrate and decoding computational cost or it may lead to a small model that does not model the latent well, leading to a worse entropy coding of the latent features.

The embodiments are described herein using an image as data to encode and decode. However, the architecture and methods apply similarly to other types of data such as 3D scenes, 3D objects, haptic textures, or other types of data.

In the following figures, for the sake of readability of the drawings, an arbitrary number of three levels of hierarchical grid of latent variables have been chosen to illustrate the proposed principles. More specifically, the figures use three levels of latent grids containing respectively 64, 16 and 4 latent values from fine to coarse, for respectively level 1 (1110), level 2 (1112) and level 3 (1114). In a more practical implementation, the number of levels is much higher, for example any number of levels between four and sixteen or even higher. A tradeoff may be chosen between the quality of the reconstruction and the computation resources required for the training process, reconstruction process and the quantity of parameters to be encoded.

**Figure 11A** illustrates an example of a bitstream encoding of a hybrid INR according to the first embodiment. The key idea of this embodiment is to cluster some of the latent variables layers and to specify the PP network used for the determined cluster. In other words, this first embodiment proposes to learn a plurality of PP networks that are associated to a plurality of clusters of discrete latent variables layers for feature-based INR methods. Therefore, more specialized and smaller networks may be used, which may reduce the size of the networks and save computation. The figure illustrates the coding of the latent variables into the bitstream 1170. The encoder processes three latent variables layers *ŷ*₀ 1110, *ŷ*₁ 1112 and *ŷ*₂ 1114.

The encoder (e.g. 600) groups latent variables layers into clusters and associate a PP network to each cluster. In the example of the figure, the encoder has created one cluster 1100 with the first latent variable layer 1100 and a second cluster 1101 with the other two latent variable layers 1112 and 1114. It associates one PP network to each latent layer 1120, 1122 for 1100 and 1101 respectively. The encoder can be further configured to learn the distributions of respective latent variables using the corresponding PP network- that is, each network trained to produce parameters of distributions of the associated latent variables. Based on these learned distribution parameters the entropy-based coders 1130 and 1132 codes the latent variables (*ŷ*₀, and (*ŷ*₁, *ŷ*₂) respectively) into the bitstream 1170. Each PP network is defined by PP network parameters, denoted by ψ_{c}, determined during the training of the PP network 1130 and 1132. An entropy-based coder (here 1125 and 1127) codes these PP network parameters into the bitstream 1170. In an aspect, for some of the latent variables, respective non-learned distributions can be used by the entropy-based coder 1125 and/or 1127. These non-learned distributions may be fixed distributions or may be distributions that were learned with respect to other latent variables (e.g., latent variables representing data from previous frames). In an aspect, at least some PP network parameters may be obtained from a set of predefined PP network parameter sets.

In some embodiments, the clusters may be encoded (e.g. entropy coded) into the bitstream or decoded from the bitstream by the decoder. In other embodiments, they may be computed by processing the characteristics of the quantized latent values or the layers information (i.e. the index k). In some embodiments, they may be computed by processing the clusters of another part of the signal (i.e. a previous frame or coding unit).

In some embodiments, the association between clusters and PP network may be encoded (e.g. entropy coded) into the bitstream or decoded from the bitstream by the decoder. In other embodiments, they may be computed by processing the characteristics of the quantized latent values, the clusters or the layers information (i.e. the index c of the cluster or the indexes *k* of the layers in the cluster). In some embodiments, they may be computed by processing the clusters or the association between clusters and PP networks of another part of the signal (i.e. a previous frame or coding unit). In some embodiments, the PP network may have a different architecture in addition to different parameters ψ_{c}. In this case, the architectures may be encoded (e.g. entropy coded) into the bitstream or decoded from the bitstream by the decoder. In other embodiments, they may be obtained by processing the characteristics of the quantized latent values, the clusters or the layers information (i.e. the index k). In some embodiments, they may be computed by processing the clusters or the association between clusters and PP networks or the PP networks of another part of the signal (i.e. a previous frame or coding unit).

**Figure 11B** illustrates an example of a bitstream encoding of a hybrid INR according to the second embodiment. The key idea of this embodiment is to use one probability prediction network for each level of latent variables but to share information related to the probability prediction networks among multiple PP networks.

Indeed, many different encoding schemes for the network parameters are possible. In some embodiments, some PP network parameters ψ_{c} may be encoded independently from each other (as in Figure 11A). In some embodiments, some PP network parameters ψ_{c} may be encoded together by a single entropy coder. In some embodiments, these parameters may be related to each other, which would impact the encoding. For example, some parameters may be shared between networks (at least two networks) and would be encoded once. In one embodiment, all parameters expect the biases may be shared, the biases may be specific to a PP network. As another example, some parameters ψₖ may be obtained by applying updates *δ*_{ψ_{c}} to some base parameters ψ and only ψ and **Δ** = {*δ*_{ψ₀}, ..., *δ*_{ψC-1}} may be encoded where C is the number of clusters.

The encoding scheme may be known to both the encoder and decoder. It may also be signaled in the bitstream in some embodiments.

This is illustrated in Figure 11B. Here, rather than encoding the parameters of the three PP networks 1120, 1122, and 1124 separately, a PP network parameter computation unit 1140 is responsible for providing shared PP network parameters information and PP network parameters information that are respectively specific to PP networks 1120, 1122 and 1124. All parameters information are encoded by an entropy coder 1145 and included in the bitstream. Multiple, separate entropy coders could also be used instead.

In some embodiments, some PP network parameters ψ_{c} may have a different architecture in addition to different parameters ψ_{c}. In some embodiments, the architectures may be encoded (e.g. entropy coded) into the bitstream or decoded from the bitstream by the decoder. In other embodiments, they may be obtained by processing the characteristics of the quantized latent values, the clusters or the layers information (i.e. the index k). In some embodiments, they may be computed by processing the clusters or the association between clusters and PP networks or the PP networks of another part of the signal (i.e. a previous frame or coding unit).

In an aspect, for some of the latent variables, respective non-learned distributions can be used by some or all of the entropy-based coders 1130, 1132 or 1134. These non-learned distributions may be fixed distributions or may be distributions that was learned with respect to other latent variables (e.g., latent variables representing data from previous frames).

**Figure 11C** illustrates an example of a bitstream encoding of a hybrid INR according to the third embodiment that combines the two first embodiments. This embodiment performs clustering of the latent variables to share one probability prediction network among multiple (clustered) levels of latent variables as described with respect to figure 11A and, in addition, determines shared information related to the multiple probability prediction networks as described with respect to figure 11B.

In some embodiments, a partition over the signal may be available to both decoder and encoder (e.g. predefined, recomputed or transmitted), and different clusters of latent variables layers and association between clusters and only PP networks may be associated to partitions. When the partitioning is predefined, only an index representative of the partitioning needs to be provided from the encoder to the decoder.

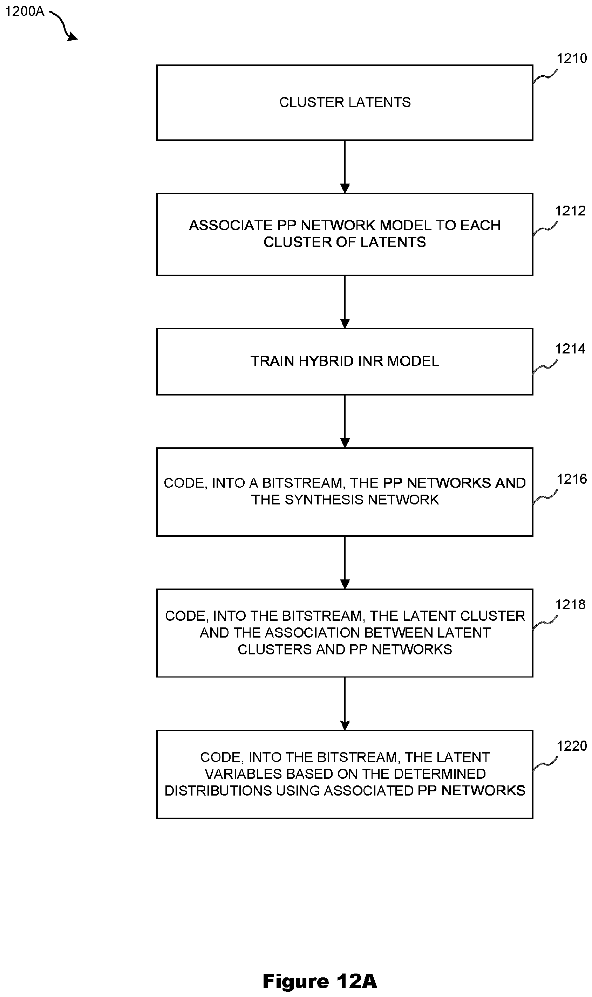

**Figure 12A** illustrates an example process for encoding data according to the first embodiment. The encoding process 1200A is for example implemented by a processor 110 of a device 100 of figure 1 or an encoder 900 of Figure 9.

In step 1210, the processor performs a clustering of the latent variable layers. Many approaches are possible. In embodiments, the variable layers may be clustered based on their index or number of elements. In embodiments, the clusters may exploit the hierarchical organization of the latent levels. For example, a cluster size could be selected and the latent levels grouped sequentially based on their ordering. For example, if a cluster size of 3 is selected, and 8 latent levels *ẑ* ={*ẑₖ, k* = 0: 7} are used, the clusters could be {*ẑ*₀*, ẑ*₁*, ẑ*₂}*,* {*ẑ*₃*, ẑ*₄*, ẑ*₅ }, {*ẑ*₆ , *ẑ*₇ }. As another example, all latent levels with an even index could be grouped together, and all latent levels with an uneven index could be grouped together in another cluster. In another set of approaches, the variable layers may be clustered based on their characteristics after fully or partially (i.e. using fewer training iterations of a first hybrid INR model). These characteristics may include characteristics latent value mean, variance, texture, number of different values, distributions of these values, etc. This may be done using any processing function on the signal, including previously trained machine learning models. The latent levels may also be clustered based on the characteristics of the signal, such as signal mean value, variance, texture. This may be done using any processing function on the signal, including previously trained machine learning models. If the signal is partitioned into coding units, this could be done at the coding unit level based on the characteristics of each coding unit.

When creating the clustering, a brute force approach is possible, where all possible clusters are considered. Only some possible clusters could also be considered for evaluation. Another possible approach is an iterative approach where an initial clustering is created, using e.g. any approach described above or by creating a single cluster with all latent levels or one cluster per latent level. The clustering can then be progressively modified, for example by considering drastic changes, splitting a cluster or moving one latent layer from one cluster to another. These changes could be constrained by some characteristics of the latent levels, such as their ordering (e.g. only moving to or merging a latent level with the clusters of their direct neighbors) or their values (e.g. only moving to or merging a latent level with the clusters of latent levels that have a similar distribution in their values).

To evaluate a change in clustering, in some embodiments a hybrid INR model may be trained for some iterations, for example using one PP network for each cluster, and compared to another model trained on a clustering without the change in terms of e.g. the achieved bitrate and distortion.

In step 1212, the processor associates a PP network to each cluster. This step involves choosing the architecture or the type of PP networks. This can involve evaluating the performance of types of PP networks, comparing these performances to different choices, choosing one choice based on the characteristics of the latent values or the clusters, for example through an expert designed algorithm or a machine learning model. As an example, a brute force approach may define a set of types of PP networks, and would evaluate all possible associations between the clusters and the types of PP in terms of bitrate and distortion and select the particular association that minimizes the cost associated to the encoding and reconstruction of the latent variables as a function of the association between the clusters and the types of PP networks.

In step 1214, the processor trains Hybrid INR model. The Hybrid INR model is trained, using, for obtaining a distribution over each latent variable layer, the type of PP networks associated to the cluster of that latent variable layer. This is the same procedure as training an hybrid INR model. Typically, the full INR model is trained together, including the up-sampling network, the synthesis network, the latent values and the different autoregressive models (or other PP models) yielding a probability distribution over the latent values. In some variants, training may involve quantization aware training. The training procedure may also involve steps to account for the coding of the probability model, such as quantization, pruning etc., for example by applying these steps, using additional noise and/or adding specific terms to the loss function such as the rate of the network parameters.

In step 1216, the processor encodes in a bitstream the neural networks (the different probability models, the synthesis model and optionally an up-sampling model). If the model involves a neural network, this is typically done by a neural compression codec such as Neural Network Coding (NNC)/ ISO/IEC 15938-17 or MPEG-7 part 17 or simply by quantizing the weights and/or pruning some neurons from the network(s).

In step 1218, the processor encodes in the bitstream the clusters and the association between clusters and the type of PP networks. This may involve the use of entropy coders. In the embodiment where the choice is done from a set of pre-determined clustering, this step is replaced by a step where the processor encodes an index representative of the selection in the set of clustering.

In step 1220, the processor encodes in the bitstream the values of each cluster of latent variable layers, using an entropy coder, based on the discrete probability distribution over the quantized latent features given by the autoregressive model (or other model) associated to the cluster of each latent value layer. This may involve quantization of the latent features if this was not done before.

In some variants, the cluster choice or the association between latent clusters and the PP networks may be predetermined and fixed (i.e. known to both the encoder and decoder). In that case, the latent clusters or the association between latent clusters and the PP networks may not be coded into the bitstream in step 1218.

The procedure above describes a sequential approach to solve the aforementioned optimization problem. There are many possible variants of this procedure in addition to those listed above. For example, several elements could be optimized at the same time. The clustering, the association between clusters and the types of PP networks and the parameters themselves could be optimized together using any optimization algorithm such as greedy search, gradient descent of a specific loss, genetic algorithms, the use of machine learning algorithms etc. As another example, associating a type of PP networks to a cluster of latent variable layers could be based at least partially on the result of the encoding of a previous cluster of latent variable layers with the same or different type of PP networks, for example using a reinforcement learning or an active learning algorithm. In yet another example, one or multiple steps may also involve some computation that can be beneficial or reused for another step. Some approaches for clustering the latent variable layers or choosing the type of PP networks associated to a cluster may require the computation and the evaluation of hybrid INR models, to evaluate the quality of such a clustering and/or type of PP networks. In that case, these computations may be reused in the other step or the results of that other step may be directly obtained from said computation or the two steps merged.

In some variants, a default type of PP networks may be included in the bitstream.

The resulting bitstream may then be stored or transmitted to a decoder.

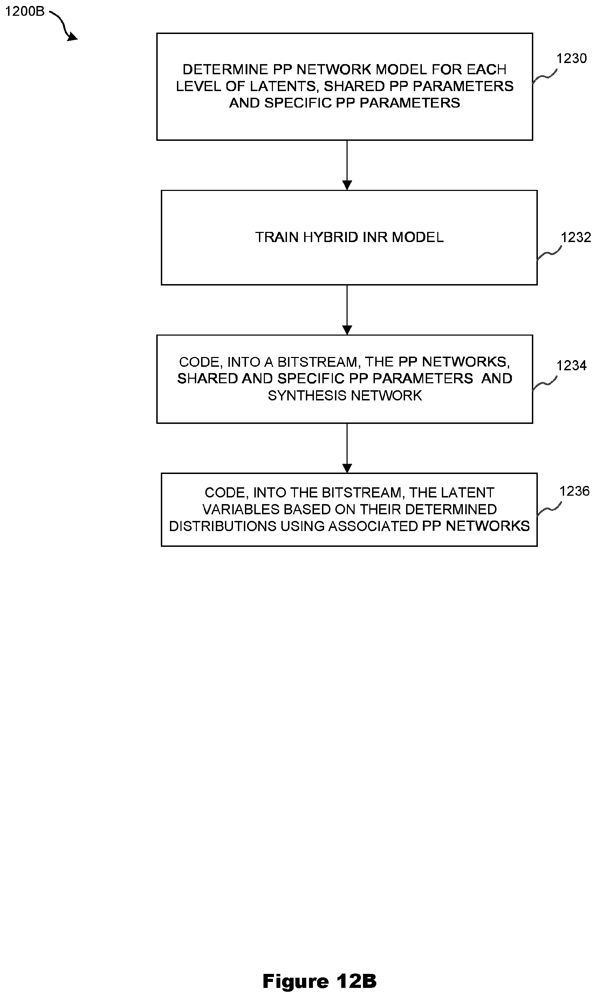

**Figure 12B** illustrates an example process for encoding data according to the second embodiment. The encoding process 1200B is for example implemented by a processor 110 of a device 100 of figure 1 or an encoder 900 of Figure 9. It may be applied to a signal or a segment of a signal.

In step 1230, the processor determines, for each level of latent variables, the PP network, the shared PP parameters (i.e. parameters that are common to at least two PP networks) and specific PP parameters (i.e. parameters that are not shared between two or more PP networks) and the encoding scheme. In at least one embodiment, the choice of PP networks and parameters is done by the encoder at the encoding stage. In another embodiment, the choice is pre-determined and fixed. In another embodiment, the choice is done from a set of predetermined PP networks and parameters and needs to be provided to the decoder. One example of predetermined choice is that the biases of the networks are specific to each PP network and the other weights of the networks are shared between all PP networks. Another example of a predetermined choice is that the weights of some (e.g. the last layers) are specific to each PP network and the weights of the other layers are shared between all PP networks. Another example of predetermined choice would be to use a network known to both the encoder and decoder.

In step 1232, the processor trains Hybrid INR model. This step is similar to step 1214 of figure 12A, with the exception that the levels of latent variables are not clustered and that weights of the PP networks may be determined from shared and specific parameters.

In step 1234, the processor encodes in a bitstream the PP Networks and the PP network parameters, some of these parameters may be shared amongst at least two PP networks and some of these parameters may be specific to one PP network. In the embodiment where the choice of PP networks and parameters is fixed, this step is omitted. In the embodiment where the choice is done from a set of pre-determined PP networks and parameters, this step is replaced by a step where the processor encodes an index representative of the selection in the set of pre-determined PP networks and parameters.

In step 1236, the processor encodes in the bitstream the values of each latent variable layer, using an entropy coder, based on the discrete probability distribution over the quantized latent features given by the PP network (e.g. autoregressive model) associated to each latent level, that is determined based on the shared parameters and the parameters specific to that latent value layer. This may involve quantization of the latent features if this was not done before.

The resulting bitstream may then be stored or transmitted to a decoder.

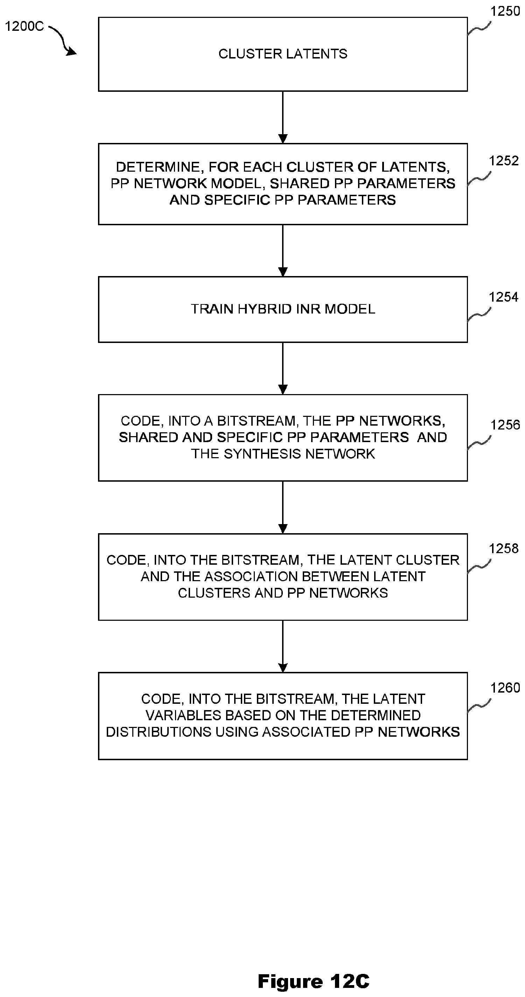

**Figure 12C** illustrates an example process for encoding data according to the third embodiment. The encoding process 1200C is for example implemented by a processor 110 of a device 100 of figure 1 or an encoder 900 of Figure 9. It may be applied to a signal or a segment of a signal. This process is the combination of the process 1200A of figure 12A and 1200B of figure 12B.

In step 1250, the processor performs a clustering of the latent variable layers, as described in step 1210 of figure 12A. In step 1252, the processor determines, for each cluster of latent variable layers, the PP network, the shared PP parameters and specific PP parameters, as described in step 1230 of figure 12B, with the difference that the parameters are not related to latent variable layers but to clusters of latent variable layers. In step 1254, the processor trains the Hybrid INR model, as described in step 1214 of figure 12A and step 1232 of figure 12B. In step 1256, the processor encodes in a bitstream the PP Networks and the PP network parameters, some of these parameters may be shared amongst at least two PP networks and some of these parameters may be specific to one PP network, as described in step 1234 of figure 12B. In step 1258, the processor encodes in the bitstream the values of each cluster of latent variable layers and the association between clusters and PP networks, as described in step 1218 of figure 12B. In step 1260, the processor encodes in the bitstream the values of each cluster of latent variable layers, as described in step 1220 of figure 12B.

In summary, the encoding method of the third embodiment comprises performing a clustering of levels of latent variables arranged in a hierarchy, determining, for each cluster, a PP network and parameters of the PP network associated with the cluster, training a hybrid implicit neural representation model to produce a synthesis network, encoding the PP Networks, the PP network parameters and the synthesis network, wherein the PP network parameters comprise at least one shared parameter that is common to at least two PP networks and at least one specific parameter that is not shared between two or more PP networks, encoding clusters of latent variable layers and the association between clusters and PP networks, and encoding values of each cluster of latent variable layers based on the distribution over latent variables using the PP network associated with the cluster.

The encoding processes 1200A, 1200B, 1200C may be applied to a signal or a segment of a signal.

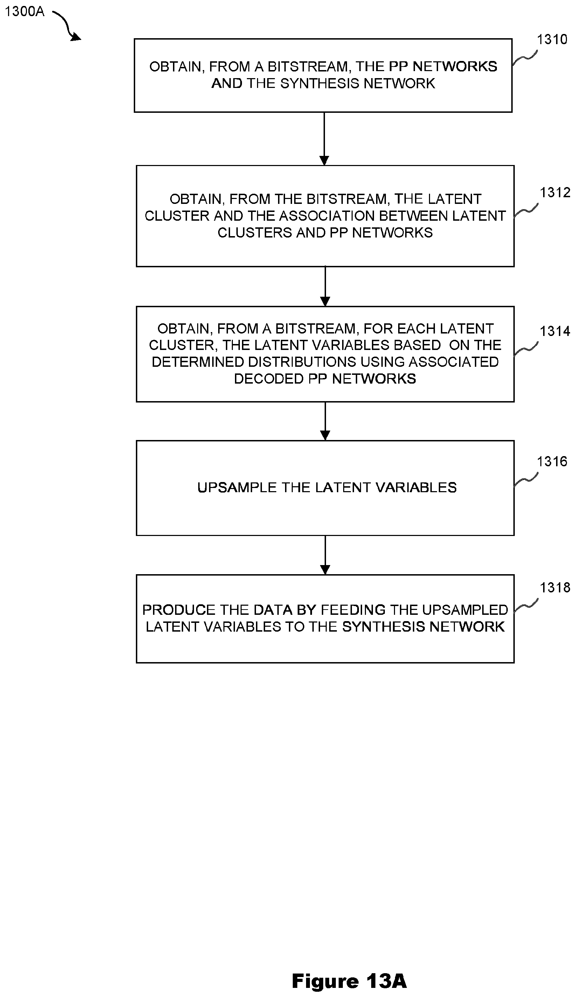

**Figure 13A** illustrates an example process for decoding data according to the first embodiment. The decoding process 1300A is for example implemented by a processor 110 of a device 100 of figure 1 or a decoder 1000 of Figure 10.

In step 1310, the processor obtains the neural networks (e.g. the different PP networks such as an auto-regressive model, the synthesis network and optionally an up-sampling network) and related parameters. This is typically done by decoding these models from the bitstream, but some or all models may already be available to the decoder, for example because some or all models have been used for another part of the signal, are already known or are transmitted separately. In the embodiment where the choice of PP networks and parameters is pre-determined and fixed, neural networks and parameters are obtained directly from the memory of the decoder device or from other means. In the embodiment where the choice is done from a set of pre-determined PP networks and parameters, this step is replaced by a step where the processor obtains an index representative of the selection in the set of pre-determined PP networks and parameters and then the processor obtains the neural networks and parameters are obtained from a predetermined set of neural networks and parameters from the memory of the decoder device or from other means, based on the index.

In step 1312, the processor obtains the clusters of latent variable layers and the association between clusters and the type of PP networks. In the variants where the cluster choice or the association between latent clusters and the PP networks is predetermined and fixed (i.e. known to both the encoder and decoder, for example because they are identical to values that have been used for another part of the signal, are already known or are transmitted separately), the latent clusters or the association between latent clusters and the PP networks are obtained directly from the memory of the decoder device or from other means. In another variant, the clusters of latent variable layers and the association between clusters and the type of PP networks are obtained from a bitstream.

In step 1314, the processor decodes, for each cluster of latent variable layers, the values of each latent variable layer from the bitstream, using an entropy decoder based on the discrete probability distribution over the quantized latent features given by the PP network associated to the cluster of each latent value layer. For each latent layer, this is similar to any hybrid INR method as described above. The particular PP network used is selected based on the association information obtained in the step 1312 and parameterized by the parameters obtained in step 1310.

In step 1316, the processor up-samples the obtained values (i.e., features). This may be performed by the upsampling network optionally decoded in the step 1310.

In step 1318, the processor produces the output data by feeding the up-sampled values to the synthesis network. For 2D images or video, the output of the synthesis network would typically be pixel colors. For 3D scene, the output would typically be color and density of a voxel. For a 3D surface (e.g. hologram), it may be a signed or unsigned distance to the surface.

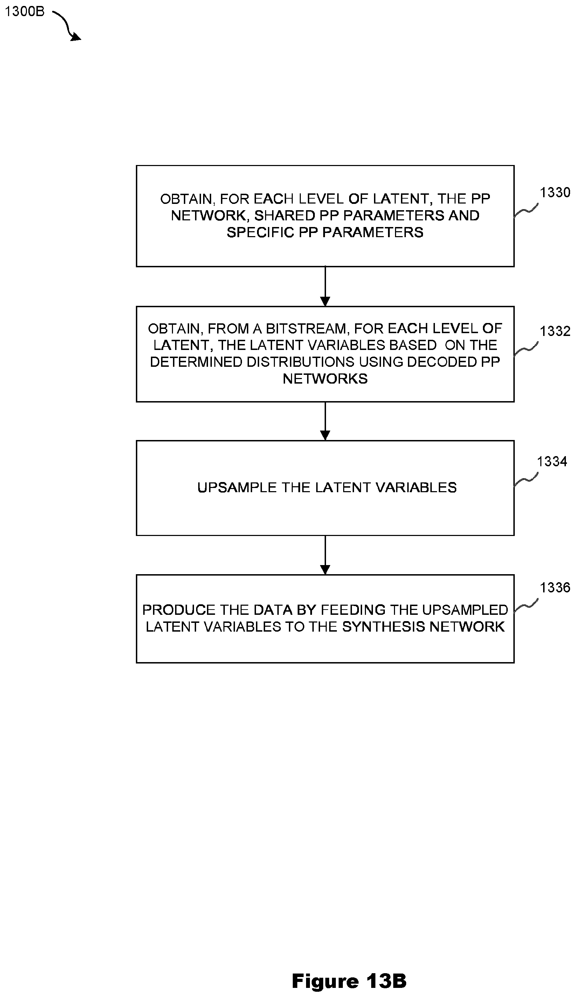

**Figure 13B** illustrates an example process for decoding data according to the second embodiment. The decoding process 1300B is for example implemented by a processor 110 of a device 100 of figure 1 or a decoder 1000 of Figure 10.

In step 1330, the processor obtains, for each level of latent variable, the neural networks (e.g. the different PP networks such as an auto-regressive model, the synthesis network and optionally an up-sampling network) and related parameters. For the parameters of the PP networks, some of these parameters may be shared amongst at least two PP networks and some of these parameters may be specific to one PP network. This is typically done by decoding the parameters and potentially the architecture of these models from the bitstream, but some or all models or parameters may already be available to the decoder, for example because some or all models have been used for another part of the signal, are already known or are transmitted separately. This step may also involve the decoding of an encoding scheme for the networks, i.e. how to combine the shared and specific PP network parameters to obtain the network weights. In that case, the PP network parameters are computed from the shared and specific PP network parameters according to the encoding scheme. In one embodiment, the computation is a copy of the shared parameters and specific parameters to initialize the PP networks. In another embodiment, the computation is an update of the base parameters by the update parameter values **Δ**. In the embodiment where the choice of PP networks and parameters is predetermined and fixed, this step is omitted and neural networks and parameters are obtained directly from the memory of the decoder device or from other means. In the embodiment where the choice is done from a set of pre-determined PP networks and parameters, this step is replaced by a step where the processor obtains an index representative of the selection in the set of pre-determined PP networks and parameters and then the processor obtains the neural networks and parameters are obtained from a predetermined set of neural networks and parameters from the memory of the decoder device or from other means, based on the index.

In step 1332, the processor obtains, for each level of latent variable, the values of each latent variable layer by decoding them from the bitstream, for example using an entropy decoder based on the discrete probability distribution over the quantized latent features given by the PP network (e.g. autoregressive model ) associated to each latent level, that is parameterized by the shared parameters and the parameters specific to that latent value layer and decoded in the step 1330. For each latent layer, this is otherwise similar to any hybrid INR method as described above.

In step 1334, the processor up-samples the obtained values (i.e., features). This may be performed by the upsampling network optionally decoded in the step 1310.

In step 1336, the processor produces the output data by feeding the up-sampled values to the synthesis network.

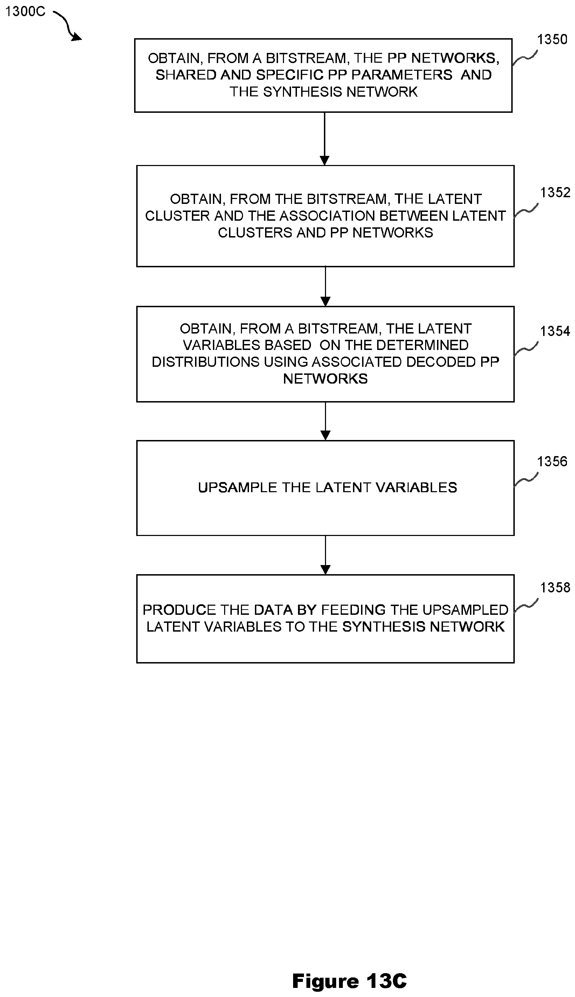

**Figure 13C** illustrates an example process for decoding data according to the third embodiment. The decoding process 1300C is for example implemented by a processor 110 of a device 100 of figure 1 or a decoder 1000 of Figure 10. This process is the combination of the process 1300A of figure 13A and 1300B of figure 13B and thus combines the clustering of latent layers and the sharing of PP network parameters.

In step 1350, the processor obtains the neural networks (e.g. the different PP networks such as an auto-regressive model, the synthesis network and optionally an up-sampling network) and related parameters, similarly than in steps 1310 of figure 13A and 1330 of figure 13B. In this third embodiment, in contrast with the second embodiment, a PP network is not associated with a level of latent variables but with a cluster of layers of latent variables (or with a single layer). In this third embodiment, in contrast with the first embodiment, parameters of the PP networks may comprise shared PP parameters (i.e. parameters that are common to at least two PP networks) and specific PP parameters (i.e. parameters that are not shared between two or more PP networks).

In step 1352, the processor obtains, e.g. from an obtained bitstream, the clusters of latent variable layers and the association between clusters and PP networks is decoded similarly than in steps 1312 of figure 13A

In step 1354, the processor obtains, for each cluster of latent variable layers, the values of each latent variable layer by decoding them from the bitstream, for example using an entropy decoder based on the discrete probability distribution over the quantized latent features given by the PP network (e.g. autoregressive model ) associated to the cluster of that latent level and that is parameterized by the shared parameters and the parameters specific to that cluster and decoded in the step 1350. For each latent layer, this is otherwise similar to any hybrid INR method as described above. The particular PP network model used is selected based on the association information decoded in the step 1350.

In step 1356, the processor up-samples the obtained values (i.e., features). This may be performed by the upsampling network optionally decoded in the step 1310.

In step 1358, the processor produces the output data by feeding the up-sampled values to the synthesis network. For 2D images or video, the output of the synthesis network would typically be pixel colors. For 3D scene, the output would typically be color and density of a voxel. For a 3D surface (e.g. hologram), it may be a signed or unsigned distance to the surface.

In summary, the decoding method of the third embodiment comprises obtaining neural networks comprising at least a plurality of probability prediction (PP) networks and a synthesis network and parameters related to the neural networks, the parameters related to the PP networks comprising at least one shared parameter that is common to at least two PP networks and at least one specific parameter that is not shared between two or more PP networks, obtaining clusters of latent variable layers and associations between clusters and PP networks, wherein the latent variables are organized in hierarchical layers, obtaining, for each cluster, values of latent variables based on determined distribution given by the associated PP network, upsampling the obtained values, and producing an output data by feeding the upsampled values to the synthesis network, wherein the latent variables are arranged in hierarchical levels and wherein a PP network is associated with a cluster of levels of latent variables or with a single level of latent variables.

In any of the decoding processes of figures 13A, 13B, 13C, the output of the synthesis network for 2D images or video would typically be pixel colors. For a 3D scene, the output would typically be color and density of a voxel. For a 3D surface (e.g. hologram), it may be a signed or unsigned distance to the surface. These processes may be applied to a signal or a segment of a signal.

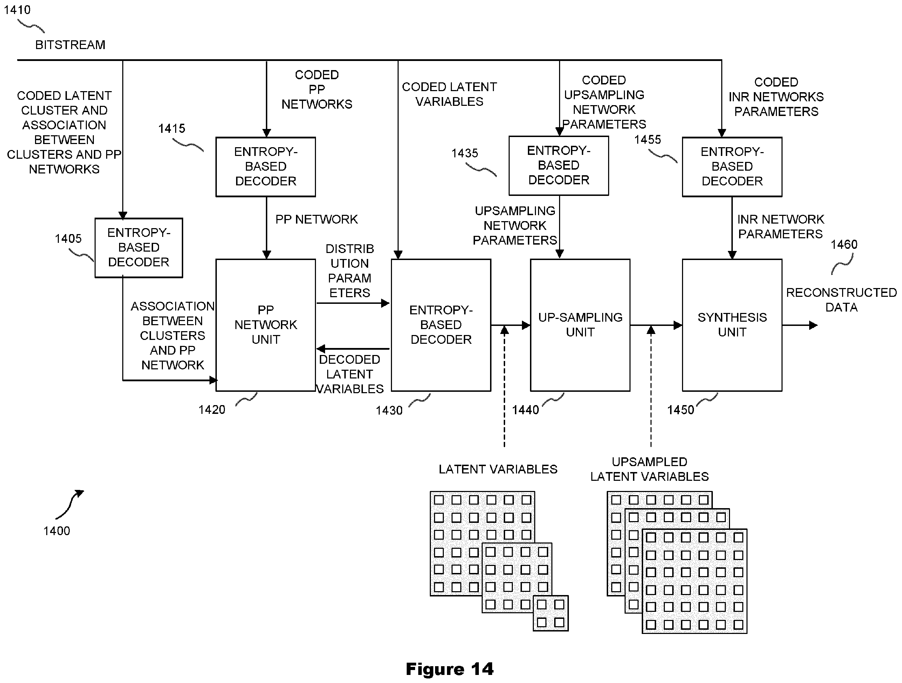

**Figure 14** illustrates an example architecture of a decoder using the COOL-CHIC principles according to embodiments. Such architecture is for example implemented by a processor 110 of a device 100 of figure 1 or a decoder 1000 of Figure 10. The decoder 1400 includes a PP network unit 1420, an up-sampling unit 1440, a synthesis unit 1450, and entropy-based decoders 1405, 1415, 1430, 1435, 1455.

In the first and third embodiments (as described in figures 11A,12A,13A and 11C, 12C, 13C), the entropy-based decoder 1405 decodes the clusters of latent variable layers and the association between clusters and PP networks, if they are not known to the decoder. The entropy-based decoder 1415 decodes from the bitstream 1410 the PP network parameters ψ_{c} (first embodiment as described in figures 11A,12A,13A) or the shared PP parameters and the specific PP parameters (second and third embodiments as described in figures 11B,12B,13B and 11C, 12C, 13C) and potentially the PP network architecture(s) or an encoding scheme to produce the PP network for each cluster of latent variables (first embodiment as described in figures 11A,12A,13A) or latent variable layer *k* (second and third embodiments as described in figures 11B,12B,13B and 11C, 12C, 13C). These networks are provided to the PP network unit. Then, each latent variable layer is decoded. Using the decoded association between clusters or latent level and PP network, the PP network unit 1420 produces distribution parameters of respective latent variables for each latent variable layer. For each layer, a PP network operates based on learned PP network parameters ψₖ, determined during the training of the PP networks and identified by the decoded association or computed from specific and shared PP network parameters. Based on the produced 1420 distribution parameters, the entropy-based decoder 1430 decodes the latent variables values from the bitstream 1410.

The decoded latent variables are then upsampled by the up-sampling unit 1440 (as performed by the up-sampling unit 640 at the encoder 600). The parameters of the up-sampling unit 1140 may have been decoded from the bitstream 1410 by the entropy-based decoder 1435. Fed by the up-sampled latent variables, the INR network 1450 reconstructs the data 1460 (e.g., a reconstructed image of a video frame) it is trained to synthesize based on the INR network parameters, decoded from the bitstream 1410 by the entropy-based decoder 1455.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "map", "frame", "slice" and "tiles" may be used interchangeably. Usually, but not necessarily, the term "reconstructed" is used at the encoder side while "decoded" is used at the decoder side. The term compressed represents the result of an encoding step followed by a decoding step.

In the present application, the terms "INR network synthesis" and "INR Network" may be used interchangeably.

In the present application, the terms "layer" and "level" may be used interchangeably when referring to the hierarchical organization of latent variables.

In the present application, the term "bitstream" refers to a data structure representative of information, the data structure being adapted to be stored or to be transmitted from a first device to a second device.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

## Claims

1. A decoding method comprising:
- obtaining neural networks comprising at least a plurality of probability prediction (PP) networks and a synthesis network and parameters related to the neural networks, the parameters related to the PP networks comprising at least one shared parameter that is common to at least two PP networks and at least one specific parameter that is not shared between two or more PP networks;
- obtaining clusters of latent variable levels and associations between clusters and PP networks;
- obtaining, for each cluster, values of latent variables based on determined distribution given by the associated PP network;
- upsampling the obtained values; and
- producing an output data by feeding the upsampled values to the synthesis network, wherein the latent variables are arranged in hierarchical levels and wherein a PP network is associated with a cluster of levels of latent variables or with a single level of latent variables.

2. The method of claim 1, wherein the PP networks and their parameters are obtained from a bitstream being decoded.

3. The method of claim 1, wherein the PP networks and their parameters are predetermined and obtained from memory.

4. The method of claim 1, wherein the PP networks and their parameters are obtained from a set of predetermined PP networks and parameters and selected from the set according to an index obtained from a bitstream being decoded.

5. The method of any of claim 1 to 4, further comprising obtaining an encoding scheme representative how the PP network parameters are determined from the shared and specific PP network parameters.

6. An encoding method comprising:
- performing a clustering of levels of latent variables arranged in a hierarchy;
- determining, for each cluster, a probability prediction (PP) network and parameters of the PP network associated with the cluster;
- training a hybrid implicit neural representation model to produce a synthesis network;
- encoding the PP Networks, the PP network parameters and the synthesis network, wherein the PP network parameters comprise at least one shared parameter that is common to at least two PP networks and at least one specific parameter that is not shared between two or more PP networks;
- encoding clusters of latent variable levels and the association between clusters and PP networks; and
- encoding values of each cluster of latent variable levels based on the distribution over latent variables using the PP network associated with the cluster.

7. The method of any of the claims 1 to 6, wherein all parameters expect the biases are shared and the biases are specific to a PP network.

8. An apparatus comprising a processor configured to:
- obtain neural networks comprising at least a plurality of probability prediction (PP) networks and a synthesis network and parameters related to the neural networks, the parameters related to the PP networks comprising at least one shared parameter that is common to at least two PP networks and at least one specific parameter that is not shared between two or more PP networks;
- obtain clusters of latent variable levels and associations between clusters and PP networks;
- obtain, for each cluster, values of latent variables based on determined distribution given by the associated PP network;
- upsample the obtained values; and
- produce an output data by feeding the upsampled values to the synthesis network,
wherein the latent variables are arranged in hierarchical levels and wherein a PP network is associated with a cluster of levels of latent variables or with a single level of latent variables.

9. The apparatus of claim 8, wherein the PP networks and their parameters are obtained from a bitstream being decoded.

10. The apparatus of claim 8, wherein the PP networks and their parameters are predetermined and obtained from memory.

11. The apparatus of claim 8, wherein the PP networks and their parameters are obtained from a set of predetermined PP networks and parameters and selected from the set according to an index obtained from a bitstream being decoded.

12. The apparatus of any of claim 8 to 11, further comprising obtaining an encoding scheme representative how the PP network parameters are determined from the shared and specific PP network parameters.

13. An apparatus comprising a processor configured to:
- perform a clustering of levels of latent variables arranged in a hierarchy;
- determine, for each cluster, a probability prediction (PP) network and parameters of the PP network associated with the cluster;
- training a hybrid implicit neural representation model to produce a synthesis network;
- encode the PP Networks, the PP network parameters and the synthesis network, wherein the PP network parameters comprise at least one shared parameter that is common to at least two PP networks and at least one specific parameter that is not shared between two or more PP networks;
- encode clusters of latent variable levels and the association between clusters and PP networks; and
- encode values of each cluster of latent variable levels based on the distribution over latent variables using the PP network associated with the cluster.

14. The apparatus of any of the claims 8 to 13, wherein all parameters expect the biases are shared and the biases are specific to a PP network.

15. A non-transitory computer readable medium storing program code instructions for implementing the method according to any of claims 1 to 7 when executed by a processor.
